**Europäisches Patentamt**

**European Patent Office**

**Office européen des brevets**

(11) Numéro de publication : **0 577 485 A1**

# DEMANDE DE BREVET EUROPEEN

(21) Numéro de dépôt : **93401647.8**

(22) Date de dépôt : **25.06.93**

(51) Int. Cl.⁵ : **G01M 15/00,** F02D 13/02, F02B 77/08

(30) Priorité : **29.06.92 FR 9207955**

(43) Date de publication de la demande : **05.01.94 Bulletin 94/01**

(84) Etats contractants désignés : **BE DE ES FR GB IT**

(71) Demandeur : **SOURIAU DIAGNOSTIC ELECTRONIQUE S.A.**
**3, Avenue du Maréchal Dévaux**
**F-91550 Paray-Vieille-Poste (FR)**

(72) Inventeur : **Vernier, Yannick**
**42 Rue Jean Zay**
**F-91300 Massy (FR)**

(74) Mandataire : **Rodhain, Claude et al**
**Cabinet Claude Rodhain 30, rue la Boétie**
**F-75008 Paris (FR)**

(54) **Sonde destinée au contrôle d'un moteur à combustion interne.**

(57)   L'invention concerne une sonde destinée au contrôle d'un moteur à combustion interne comportant un capteur de vibration (30) et un moyen de fixation (20) adapté à rendre le capteur solidaire de la culasse (5) d'un moteur.

L'invention concerne aussi un procédé de contrôle de la distribution d'un moteur à combustion interne comportant les étapes suivantes :

— détecter, moteur tournant, les vibrations mécaniques générées par le choc d'au moins une tête (2) de soupape (1) d'un cylindre sur son siège (6) à l'instant de la fermeture, ladite détection étant effectuée par une sonde selon une des revendications précédentes, placée sur la culasse (5) du moteur,

— comparer l'instant d'apparition desdites vibrations mécaniques avec au moins un instant de référence (SYN) positionné sur le cycle du moteur.

FIG.7

La présente invention a pour objet une sonde destinée au contrôle d'un moteur à combustion interne, et plus particulièrement adaptée à la réalisation de diagnostic des systèmes de distribution.

Le système de commande de la distribution d'un moteur à combustion interne garantit la coordination des mouvements de l'arbre à came avec celui du vilebrequin, de sorte que les soupapes se lèvent et se ferment au moment où chaque piston passe par un point précis de son cycle.

La commande de distribution est constituée d'un empilage de pièces mécaniques en mouvement dans des carters. Les coefficients de dilatation thermique et les gradients de température diffèrent d'un élément et d'un point à l'autre. Le jeu aux soupapes est l'espace laissé entre l'extrémité de la queue de soupape et sa commande, qui garantit l'appui de la tête de soupape sur son siège, quelles que soient les variations de température et le régime du moteur auxquels sont soumis les éléments.

Il existe différents modes de distribution, tels que les distributions avec arbre à came latéral, avec arbre à came en tête avec attaque indirecte de la soupape, avec arbre à came en tête avec attaque directe de la soupape, avec éventuellement mise en oeuvre d'un poussoir hydraulique. Il existe également des systèmes de distribution desmodromiques dans lesquels un culbuteur de fermeture remplace le ressort de rappel de la soupape.

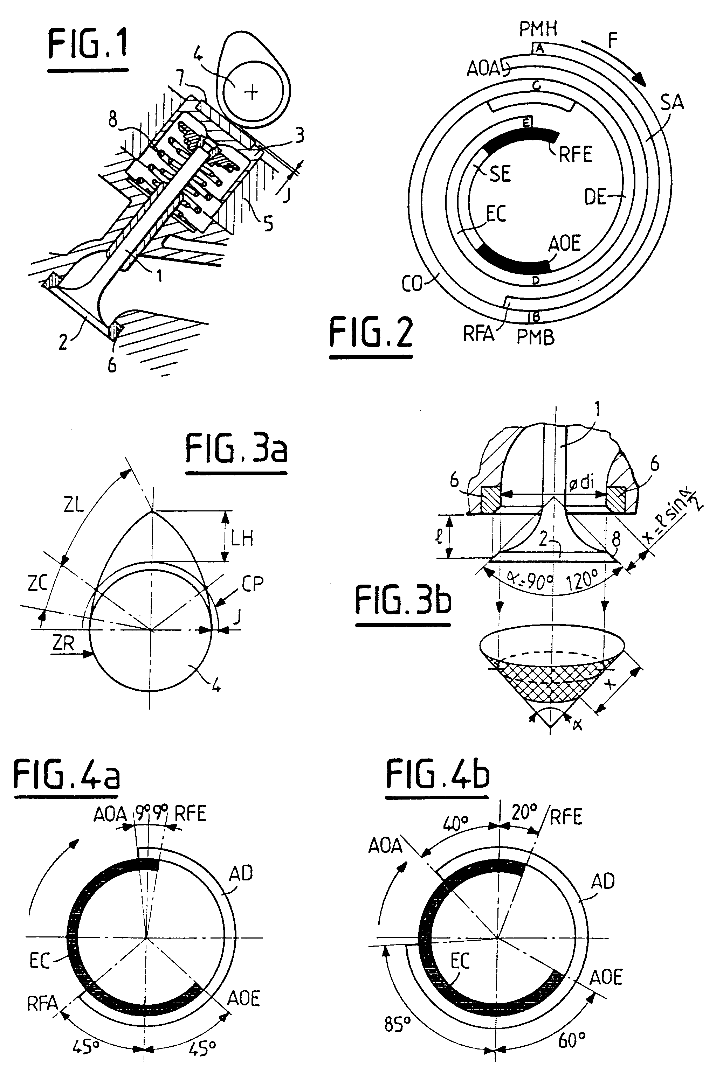

La figure 1 représente une distribution avec arbre à came en tête à attaque directe (par exemple PEUGEOT 205 GTI, WOLKSWAGEN, GOLF GTI, etc.). Dans ce type de distribution, une came 4 attaque directement une pastille calibrée 7 d'un poussoir 3 d'une soupape 1 rappelée par un ressort 8. La tête de soupape 2 est rappelée par le ressort 8 sur une butée conique 6. Le poussoir 3 coulisse dans une ouverture usinée dans la culasse 5 du moteur. Comme le montre le diagramme de la figure 2, la soupape d'admission SA présente lors du cycle d'admission AD entre le point mort haut PMH et le point mort bas PMB, une avance d'ouverture à l'admission "AOA" et un retard de fermeture à l'admission "RFA". Après les cycles de compression CO, et de détente DE, la soupape d'échappement SE présente, lors du cycle d'échappement EC une avance à l'ouverture à l'échappement AOE et un retard à la fermeture à l'échappement RFE.

Le tracé d'une came 4 permettant d'ouvrir et de fermer une soupape 1 se décompose en trois zones, à savoir (à la figure 3a) :

1) la zone de levée ZL correspondant au diagramme de distribution, qui donne angulairement le début et la fin d'ouverture de la soupape et sa levée maximale,

2) la zone de raccordement ZC, appelée rampe de silence, dans laquelle le contact entre le poussoir 3 et la came 4 doit s'effectuer, et

3) la zone de retour ZR pendant laquelle la tête de soupape 2 est en appui sur son siège 6. La zone de raccordement ZC ou rampe de silence permet le rattrapage du jeu de dilatation de la distribution. Sur cette zone, la levée de la soupape est à vitesse constante.

La perméabilité d'un moteur est un paramètre représentatif de sa capacité de remplissage. Elle correspond à la section effective de passage des gaz dans le cylindre sur un cycle.

La section S de passage des gaz à la soupape pour une valeur de levée 1 de soupape s'exprime S = 2 Π R1 sin($\alpha$/2)

R étant le rayon intérieur du siège de soupape 6

$\alpha$ l'angle de la portée conique 8 de la soupape 1 sur le siège (voir figure 3b).

La perméabilité, qui est le surface représentative de la quantité de gaz que laissera passer la soupape au cours d'un cycle d'ouverture et de fermeture s'exprime alors :

$$\Sigma = \int_{OS}^{FS} 2\Pi R \sin \alpha/2 \; 1(\theta) \; d\theta$$

Avec OS = Ouverture Soupape
FS = Fermeture Soupape

La perméabilité varie avec le jeu de la soupape dont sont fonction les bornes de l'intégrale OS et FS et la loi de levée de la soupape l($\theta$).

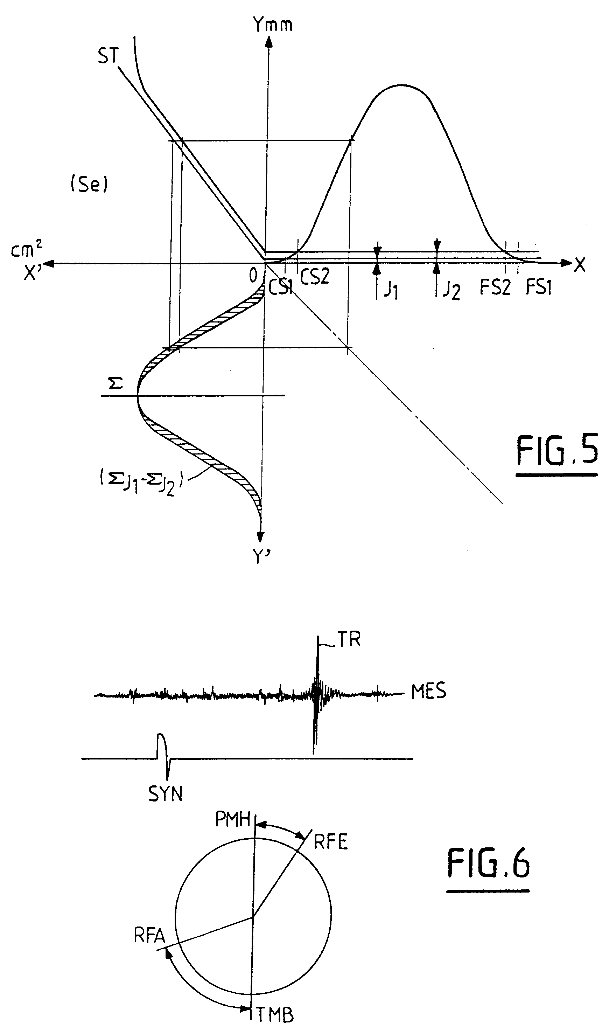

La figure 5 est une représentation graphique de la perméabilité des soupapes en fonction du jeu. Ici, on a représenté les courbes de perméabilité $\Sigma$ pour les deux jeux J1 et J2. La bisectrice positionnée dans le cadran X0Y' permet de reporter l'échelle des angles de vilebrequin sur l'axe OY' et le tracé géométrique de la perméabilité s'obtient en croisant les verticales issues des points de $S_E$ représentant la section de passage avec les horizontales correspondantes. La surface limitée par la courbe obtenue représente la perméabilité. La surface hachurée représente l'écart de perméabilité $\Sigma_{J1} - \Sigma_{J2}$ généré par la variation du jeu de soupape $J_1 - J_2$.

Le diagramme de distribution varie avec le jeu des soupapes. L'augmentation du jeu conduit à retarder l'ouverture des soupapes et à avancer leur fermeture. L'angle d'ouverture en est donc diminué ainsi que la période de croisement admission-échappement. Ces variations jouent notamment sur la régularité de fonctionnement au ralenti sur les émissions polluantes. La valeur excessive du jeu provoque un affaiblissement de la perméabilité du moteur, l'usure de surface de contact et rend la distribution bruyante. A l'opposé, un serrage (jeu négatif ou nul) entraîne un échauffement dangereux de la tête de soupape 2 et une perte de puissance du moteur.

Les figures 4a et 4b représentent pour le même moteur l'influence importante d'une faible variation du jeu sur le diagramme angulaire de la distribution, ainsi :

La figure 4a décrit le diagramme de distribution correspondant à un jeu de fonctionnement à froid de 0,25 mm à l'admission et à l'échappement.

La figure 4b décrit le diagramme de distribution, pour le même moteur, pour un jeu de fonctionnement incorrect à froid de 0,1 mm à l'admission et de 0,2 mm à l'échappement. La partie en gris représente l'admission AD et la partie en noir, l'échappement EC. AOA désigne l'avance à l'ouverture à l'admission, et AOE, l'avance à l'ouverture à l'échappement. RFA désigne le retard à la fermeture à l'admission, RFE le retard à la fermeture à l'échappement.

Certains systèmes de distribution présentent, comme il a été mentionné ci-dessus, des poussoirs hydrauliques dont la fonction est le rattrapage automatique du jeu. Cependant, leur fonctionnement peut être altéré par une mauvaise étanchéité du clapet, un débit de fuite trop élevé, un gommage du piston plongeur, tous ces phénomènes entraînant un déphasage du diagramme de distribution et une perte de puissance.

La transmission entre vilebrequin et arbre à came peut s'effectuer par cascade de pignons, par chaîne ou par courroie crantée. Cette dernière solution est la plus répandue en raison de son faible coût, de son silence de fonctionnement, de son absence de lubrification, de la vitesse élevée et de son absence de glissement. L'allongement de la courroie peut provoquer un retard angulaire $\varphi$ de la poulie menée $P_2$ par rapport à la poulie menante $P_1$ (voir figure 11a), ce retard induisant un décalage du diagramme de distribution. Certains constructeurs utilisent ce principe pour commander le calage du diagramme de distribution en jouant sur l'augmentation de tension par un tendeur T ou une détente d'un des brins, créant ainsi une distribution variable ("Variocam" de la firme PORSCHE, etc.).

Il résulte de ce qui précède que le diagramme de distribution est révélateur du bon fonctionnement de la distribution d'un moteur, qu'il renseigne sur le jeu des soupapes, l'allongement des courroies, l'état des poussoirs, autant d'éléments dont les dérives dégradent le fonctionnement global du moteur.

Il résulte de l'étude précédente qu'il apparaît intéressant, afin de contrôler ces dérives, de pouvoir procéder avec des moyens simples à un enregistrement du diagramme de distribution des moteurs.

La présente invention a ainsi pour objet un dispositif permettant de caractériser le jeu des soupapes et/ou de caractériser l'allongement des chaînes ou courroies de distribution et/ou de diagnostiquer l'état des poussoirs hydrauliques et/ou de contrôler le bon fonctionnement du système de distribution variable.

L'invention propose ainsi d'effectuer, en limitant les opérations de dépose mécanique préalables, le relevé dynamique du diagramme de distribution réel, pour chaque cylindre du moteur contrôlé et de comparer ce diagramme au diagramme théorique du moteur.

L'idée de base dans l'invention consiste à enregistrer, moteur tournant, les vibrations mécaniques générées par le choc de la tête de soupape sur son siège à l'instant de la fermeture. Ces vibrations, propagées par la culasse sont recueillies par une sonde intégrant un capteur, par exemple un accéléromètre piézoélectrique, la sonde étant selon l'invention, facile à mettre en place sur la culasse.

L'invention concerne ainsi une sonde destinée au contrôle d'un moteur à combustion interne, du type comportant un capteur de vibrations présentant une sortie de signal correspondant à une détection de vibrations mécaniques et un moyen de fixation adapté à rendre le capteur solidaire de la culasse d'un moteur. Une telle sonde est connue du brevet US-4 450 811 (NGK Spark Plug).

Selon l'invention, le capteur est solidaire d'un support adapté pour être monté sur une bougie, de telle sorte que le support ait une face en contact avec la culasse du moteur, le support pouvant être adapté pour être monté coaxialement à la bougie, plus particulièrement sur un capuchon de ladite bougie. Le support peut être taraudé.

Selon un mode de réalisation préféré, le tube est en matériau magnétisable et le capteur présente une embase aimantée.

L'invention concerne également un procédé de contrôle de la distribution d'un moteur à combustion interne caractérisé en ce qu'il comporte les étapes suivantes :

- détecter, moteur tournant, les vibrations mécaniques générées par le choc d'au moins une tête de soupape d'au moins un cylindre sur son siège à l'instant de la fermeture, ladite détection étant effectuée par une sonde du type précité placée sur la culasse du moteur, et

- comparer l'instant d'apparition desdites vibrations mécaniques avec au moins un instant de référence positionné sur le cycle du moteur.

Le procédé peut comporter une étape de déterminer pour au moins une soupape d'admission le retard à la fermeture et/ou une étape de déterminer pour au moins une soupape d'échappement le retard à la fermeture.

D'autres caractéristiques et avantages de l'invention seront mieux comprises à la lecture de la description qui va suivre, donnée à titre d'exemple non limitatif, en liaison avec les dessins qui représentent :

- les figures 1, 2, 3a, 3b, 4a, 4b, 5, des illustrations explicatives du fonctionnement d'un système de distribution d'un moteur à combustion interne explicitées plus haut ;

- la figure 6, l'illustration d'un procédé de mesure selon l'invention ;
- les figures 7 et 8, deux vues en coupe d'un mode de réalisation d'un capteur selon l'invention ;
- les figures 9 et 10, des diagrammes de mesure correspondant à un retard de la soupape à la fermeture, respectivement inférieur et supérieur au retard théorique ;
- la figure 11a est une vue schématisée d'un système de distribution à courroie de distribution sur lequel est représenté le jeu mentionné ci-dessus.
- la figure 11b, l'illustration du procédé selon l'invention adapté à la vérification d'un système de distribution variable ; et
- la figure 12, un banc de mesure mettant en oeuvre l'invention.

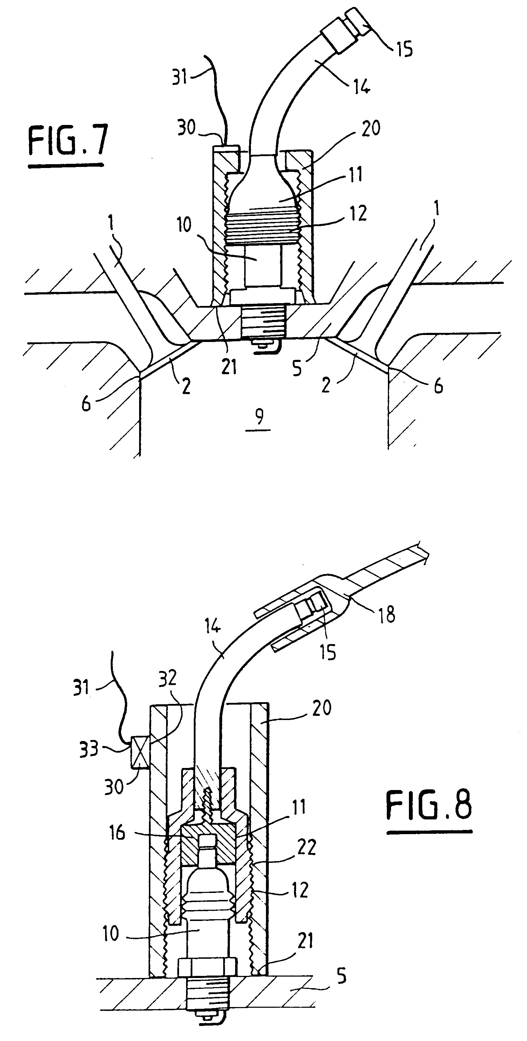

La figure 6 illustre une mise en oeuvre du procédé selon l'invention par visualisation sur un oscilloscope, d'une part d'un signal de synchronisation SYN donnant une impulsion de synchronisation correspondant à un événement daté, c'est-à-dire dont l'instant d'apparition est connu et qui est positionné sur le cycle du moteur tel que le signal d'un capteur de point mort haut PMH, de point mort bas PMB ou bien encore un signal prélevé directement sur le secondaire d'allumage du moteur. Ce signal de synchronisation SYN est donc visualisé sur un oscilloscope en même temps qu'un signal de mesure MES produit par un capteur monté sur la culasse du moteur à proximité d'un cylindre dont on veut vérifier le fonctionnement. Le capteur génère un signal vibratoire MES représentant les vibrations mécaniques de la culasse, ledit signal présentant des transitoires TR (ou impulsions) représentatives du choc de la tête de soupape 2 à l'instant de sa fermeture. Il est ainsi possible de visualiser directement sur oscilloscope le retard à la fermeture à l'échappement RFE par rapport au point mort haut PMH ou bien le retard de fermeture à l'admission par rapport au point mort bas PMB du moteur. Ces écarts sont représentés par la distance entre l'impulsion de synchronisation SYN et le transitoire TR observé dans le signal de mesure MES pour la soupape correspondante.

Les figures 7 et 8 représentent un mode de réalisation de la sonde particulièrement avantageux de par la position du capteur par rapport à la source vibratoire.

Selon la figure 7, un capteur 30 est placé solidaire d'un manchon 20 placé autour d'un capuchon 11 de bougie présentant un prolongateur 14 se terminant par un élément de contact électrique 15. Le manchon 20 présente une face inférieure 21 qui est maintenue en contact avec la culasse 5 lors de la mesure. Le capteur 30 génère un signal RFM présentant des impulsions représentatives des vibrations mécaniques. Le positionnement de la sonde par rapport aux soupapes est la même quel que soit le cylindre contrôlé étant donné que la sonde est placée sur la bougie 10 du cylindre 9 contrôlé, et la mesure n'est pas perturbée par la présence des autres soupapes correspondant aux autres cylindres en raison de la proximité immédiate de la sonde et des soupapes dont la fermeture est mesurée.

Il est en outre important de remarquer qu'un tel positionnement imposé permet d'obtenir une bonne reproductibilité des mesures d'un véhicule à l'autre.

Selon la figure 8, le manchon 20 est cylindrique et taraudé sur sa face intérieure en 22 pour venir se visser sur la partie inférieure taraudée 12 d'un prolongateur standard 11, qui est raccordé à un câble d'alimentation 18 pour la bougie 10. La face inférieure du manchon 20 est en contact avec la culasse 5 et le capteur 30 présente un socle magnétique 32 grâce auquel il vient se fixer sur le manchon 20, lui-même en matériau magnétisable. Le capteur 30 présente une sortie de signal de mesure 33 à laquelle est raccordé un câble de mesure 31.

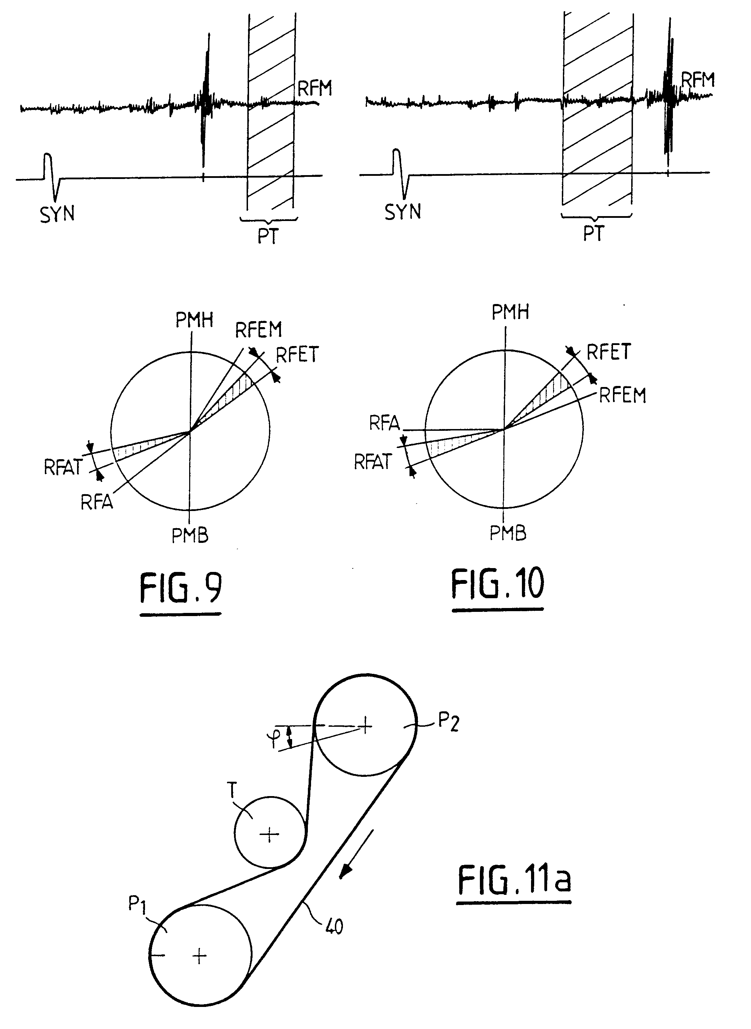

Les figures 9 et 10 illustrent deux cas de mesure. A la figure 9, le retard à la fermeture mesuré RFEM est inférieur au retard théorique RFET qui doit être compris dans la plage théorique PT hachurée. La fermeture prématurée de la soupape correspond à un jeu de soupapes excessif ou à un poussoir hydraulique défectueux.

La figure 10 correspond au cas où le retard mesuré RFEM est supérieur au retard de fermeture théorique RFET à l'échappement. La fermeture tardive de la soupape correspond au cas d'un allongement de chaîne ou de courroie de distribution.

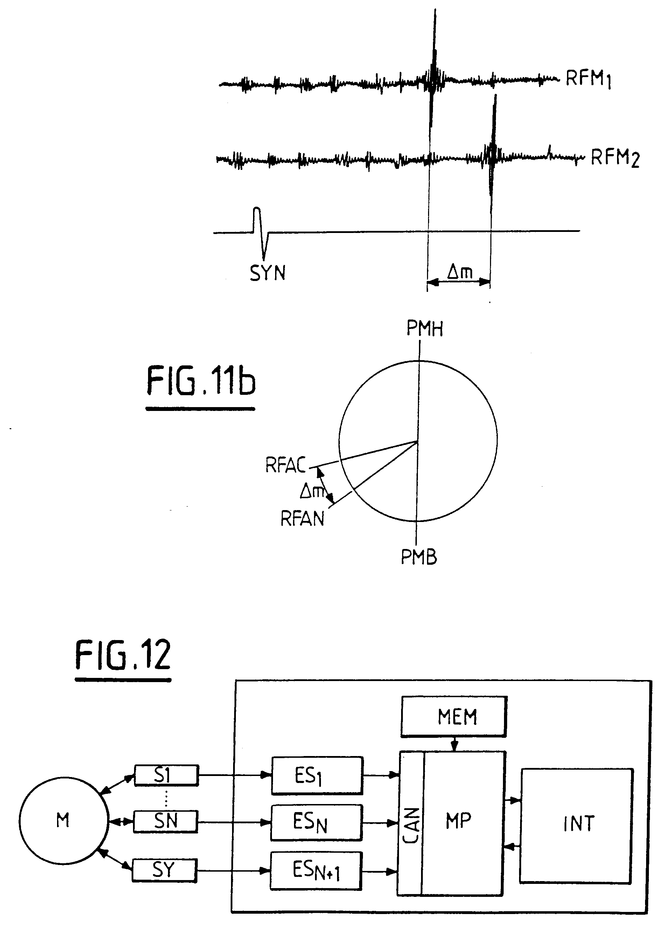

La figure 11b illustrent le contrôle du fonctionnement d'un système de distribution variable. A la figure 11b, on effectue deux mesures RFM1 et RFM2 d'une part, RFM1 avec l'arbre à came non commandé, et d'autre part, RFM2 avec l'arbre à came commandé. La variation angulaire $\Delta_M$ mesurée doit correspondre à une valeur théorique fixée par le constructeur. Le système de mesure selon l'invention permet de vérifier le bon fonctionnement de la commande d'arbre à came et de mesurer pour chaque cylindre la variation angulaire $\Delta_M$.

Un banc de mesure mettant en oeuvre l'invention est représenté à la figure 12. Il comporte en vue de réaliser un diagnostic de distribution d'un moteur M, N sondes $S_1 ... S_N$ (en nombre égal au nombre de cylindres du moteur à contrôler dans le cas où un diagnostic complet est réalisé en une seule opération), et une sonde SY pour générer le signal de synchronisation SYN. Des circuits d'entrée et de mise en forme $ES_1 ... ES_N$ pour les signaux des N sondes, et $ES_{N+1}$ pour le signal SYN attaquent une unité centrale de traitement PRU comprenant d'une part un microprocesseur MP et d'autre part un étage de conversion analogique/numérique CAN. Les valeurs sont automatiquement converties puis numérisées par le microprocesseur MP qui effectue les calculs de datation des événements et la comparaison avec les données sélectionnées par l'opérateur à l'aide d'un clavier disposé dans une interface INT, à partir d'une base de données comportant les données des moteurs issues des constructeurs automobiles et stockée dans une mémoire MEM. Une comparaison entre les valeurs mesurées et les données du constructeur permettent d'effectuer le contrôle de la distribution du moteur M en fabrication ou en après-vente. On notera que ces comparaisons peuvent également être réalisées par visualisation des signaux à l'aide d'un simple oscilloscope.

## Revendications

**1)** Sonde destinée au contrôle d'un moteur à combustion interne, comportant un capteur de vibrations (30) présentant une sortie de signal (33) correspondant à une détection de vibrations mécaniques et un moyen de fixation (20) adapté à rendre le capteur solidaire de la culasse (5) d'un moteur, caractérisée en ce que le capteur est solidaire d'un support (20) adapté pour être monté sur une bougie (10) de telle sorte que le support (20) ait une face (21) en contact avec la culasse (5) du moteur.

**2)** Sonde selon la revendication 1, caractérisée en ce que le support (20) est adapté pour être monté coaxialement à la bougie (10).

**3)** Sonde selon la revendication 2, caractérisée en ce que le support (20) est adapté pour être monté sur un capuchon (11) de ladite bougie (10).

**4)** Sonde selon la revendication 3, caractérisée en ce que le support (20) est un tube taraudé.

**5)** Sonde selon la revendication 2, caractérisée en ce que le tube (20) est en matériau magnétisable et en ce que le capteur (30) présente une embase aimantée (32).

**6)** Sonde selon la revendication 1, caractérisée en ce que le capteur (30) est un accéléromètre.

**7)** Procédé de contrôle de la distribution d'un moteur à combustion interne caractérisé en ce qu'il comporte les étapes suivantes :
- détecter , moteur tournant, les vibrations mécaniques générées par le choc d'au moins une tête (2) de soupape (1) d'un cylindre sur son siège (6) à l'instant de sa fermeture, ladite détection étant effectuée par une sonde selon une des revendications précédentes, placée sur la culasse (5) du moteur,
- comparer l'instant d'apparition desdites vibrations mécaniques avec au moins un instant de référence (SYN) positionné sur le cycle du moteur.

**8)** Procédé selon la revendication 7, caractérisé en ce qu'il comporte une étape de déterminer pour une dite soupape (1) le retard à la fermeture à l'admission (RFA).

**9)** Procédé selon la revendication 7, caractérisé en ce qu'il comporte une étape de déterminer pour une dite soupape le retard à la fermeture à l'échappement (RFE).

# FIG.1

# FIG.2

# FIG.3a

# FIG.3b

# FIG.4a

# FIG.4b

FIG.5

FIG.6

7

FIG.7

FIG.8

RFM

SYN

PT

RFM

SYN

PT

PMH

RFEM

RFET

RFAT

RFA

PMB

FIG.9

PMH

RFET

RFEM

RFA

RFAT

PMB

FIG.10

φ

P2

T

P1

40

FIG.11a

RFM₁

RFM₂

SYN

Δm

## FIG.11b

PMH

RFAC

Δm

RFAN

PMB

## FIG.12

M

S1

SN

SY

ES₁

ESN

ESN₊₁

CAN

MP

MEM

INT

**Office européen des brevets**

## RAPPORT DE RECHERCHE EUROPEENNE

Numero de la demande

EP    93 40 1647

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | US-A-4 450 811 (ICHIKAWA)<br>* abrégé; figure 1 *<br>--- | 1 | G01M15/00<br>F02D13/02<br>F02B77/08 |
| A | US-A-5 029 565 (TALBOT)<br>* colonne 3, ligne 18 - ligne 29 *<br>--- | 6 | |
| A | FR-A-2 526 865 (AVL GESELLSCHAFT FUER VERBRENNUNGSKRAFTMASCHINEN UND MESSTECHNIK MBH.)<br>* revendications *<br><br>----- | 7 | |

| | DOMAINES TECHNIQUES RECHERCHES (Int. Cl.5 ) |
|---|---|
| | F02D<br>F02B<br>G01L<br>G01M |

Le présent rapport a été établi pour toutes les revendications

| Lieu de la recherche | Date d'achèvement de la recherche | Examinateur |
|---|---|---|
| LA HAYE | 31 AOUT 1993 | ZAFIROPOULOS N. |